# EUROPÄISCHE PATENTSCHRIFT

(11) **EP 3 203 262 B1**
(45) Veröffentlichungstag und Bekanntmachung des Hinweises auf die Patenterteilung: **14.03.2018**
(21) Anmeldenummer: 17150004.4
(22) Anmeldetag: 02.01.2017
(51) Int. Cl.: G01S 17/42, F16P 3/14, G01S 7/481, G01S 17/89, G01S 17/02

(54) **OPTOELEKTRONISCHE VORRICHTUNG ZUR ABSICHERUNG EINER GEFAHRENQUELLE**
OPTOELECTRONIC DEVICE FOR SECURING A SOURCE OF DANGER
DISPOSITIF OPTO-ÉLECTRIQUE DE PROTECTION CONTRE UNE SOURCE DE DANGER

(30) Priorität: 02.02.2016 DE 102016101793
(43) Veröffentlichungstag der Anmeldung: 09.08.2017
(73) Patentinhaber: Sick AG, 79183 Waldkirch (DE)
(72) Erfinder: Neubauer, Dr. Matthias, 79102 Freiburg (DE); Gebauer, Jens, 79312 Emmendingen (DE); Hofmann, Dr. Christoph, 79194 Gundelfingen (DE)

(56) Entgegenhaltungen:
- EP-A1- 2 023 160
- EP-A1- 2 469 300
- DE-A1-102009 021 708
- DE-U1-202011 052 106
- GB-A- 2 186 970
- JP-A- 2011 257 276

## Beschreibung

Die Erfindung betrifft eine optoelektronische Vorrichtung zur Absicherung einer Gefahrenquelle in einem Raumbereich mit einem entfernungsauflösenden Lichtempfänger nach dem Oberbegriff von Anspruch 1.
Zur Überwachung von Bereichen oder Räumen sowie besonders von Gefahrenstellen können optische Schutzeinrichtungen eingesetzt werden. Eine besonders genaue Überwachung ist dabei mit 3-D-Sensoren möglich, die auf verschiedenen Verfahren wie Stereoskopie, Triangulation, Laufzeit, der Störung passiver zweidimensionaler Muster, der Auswertung von projizierten Beleuchtungsmustern und weiteren Verfahren basieren können. Ziel der Überwachung ist jeweils die Erkennung eines als kritisch eingestuften Zustandes innerhalb eines dreidimensionalen Schutzraums, der dann zu einer Warnung oder einer Absicherung einer Gefahrenquelle etwa in Form einer sicherheitsgerichteten Abschaltung führt. Der kritische Zustand kann ein Eingreifen oder gar Betreten durch eine Bedienperson in den Schutzraum sein. Ein Bereichsüberwachungssensor ist aus DE 10 2009 021 708 A1 benannt. Derartige optische Schutzeinrichtungen arbeiten zumeist im infraroten Spektralbereich und werden häufig zusammen mit mechanischen Schutzeinrichtungen eingesetzt. Die mechanischen Schutzeinrichtungen sind Abtrennungen, durch die Bedienpersonal noch hindurchschauen kann, um die Maschine beobachten zu können. Die Abtrennungen bestehen daher beispielsweise aus Plexiglas oder Metallgittern mit offenen Maschen.
Generell führen stark IR-remittierende bzw. stark IR-absorbierende Objekte zur Über- bzw. Untersteuerung des Sensors. Die Folge in beiden Fällen ist, dass der Sensor die Entfernung zum Objekt nicht mehr berechnen kann. Objekte mit übersteuernden oder untersteuernden Eigenschaften außerhalb des Schutzraums, die aus Sicht des Sensors hinter dem virtuellen Schutzraum liegen, müssen daher aus Sicherheitsgründen als eine "Verletzung" des Schutzraums angenommen werden, obwohl sich das Objekt nicht im Schutzraum befindet.

Da das infrarote Licht des Sensors die transparenten Abtrennungen zum größten Teil durchdringt, tritt dann das Problem auf, dass Objekte außerhalb der überwachten Szene, also hier die Bereiche hinter einer mechanischen Abtrennung, das Sensorverhalten negativ beeinflussen können. Zum Beispiel kann eine retroreflektierende Warnweste einer Bedienperson oder abgestelltes Material eine Übersteuerung (Blendung) der Kamera bewirken. Es erfolgt dann eine Not-Abschaltung, die eigentlich nicht notwendig war. Es kann auch auftreten, dass das Objekt hinter der Abtrennung das IR-Licht absorbiert und der Sensor nichts "sieht" und um eine Störung auszuschließen abschalten muss.

Wenn metallene Gitter als Abtrennungen eingesetzt werden, können folgende Probleme Fehler verursachen: Durch feine und/oder regelmäßige Strukturen können ungültige Messwerte/Tiefenwerte am Gitter entstehen. Diese ungültigen Tiefenwerte verhindern einen zuverlässigen Sensorbetrieb. Ein weiteres Problem tritt durch blanke, also stark reflektierende Gitterstäbe auf, die eine erhöhte Glanzwirkung zeigen und deshalb zu Detektionsproblemen führen.

Davon ausgehend ist es Aufgabe der Erfindung, eine Lösung zu schaffen, die diese negativen Einflüsse von außerhalb der Abtrennungen verhindert oder zumindest reduziert, wobei die Abtrennungen weiterhin visuell transparent bleiben sollen.

Diese Aufgabe wird gelöst durch eine optoelektronische Vorrichtung mit den Merkmalen des Anspruchs 1.

Die Vorrichtung zur Absicherung einer Gefahrenquelle in einem Raumbereich umfasst mindestens einen Sensor, der im infraroten Spektrum arbeitet und welcher entfernungsaufgelöste Daten des Raumbereichs erzeugen kann, oder mithilfe derer entfernungsauflösende Daten berechnet werden können, sowie eine Auswertungseinheit, die für die Auswertung der Daten zur Detektion von Objekten in einem dreidimensionalen Schutzraum innerhalb des Raumbereichs ausgebildet ist, wobei zusätzlich die Gefahrenquelle zumindest teilweise durch eine mechanische Abtrennung gesichert ist, die für visuell sichtbares Licht zumindest größtenteils durchlässig ist. Erfindungsgemäß ist die Abtrennung mit einer Schicht beschichtet, so dass die unbeschichtete und für den Bildsensor zumindest teiltransparente Abtrennung durch die Schicht für den Bildsensor in definierter Weise sichtbar und im Infraroten undurchsichtig wird.

Wenn die beschichtete Abtrennung für die optoelektronische Vorrichtung einerseits sichtbar ist und andererseits undurchsichtig, kann es nicht mehr auftreten, dass Objekte hinter der Abtrennung den Bildsensor stören, indem sie ihn blenden oder indem sie das Licht absorbieren. Gleichzeitig kann die Schicht so ausgebildet sein, dass sie für das sichtbare Licht und damit visuell durchsichtig bleibt.

Der optische Sensor kann auch mehrere Sensoreinheiten aufweisen, die einen gemeinsamen Raumbereich überwachen.

Vorzugsweise ist die Schicht eine reflektierende Folie, die dann in einfacher Weise auf die Abtrennung aufgeklebt werden kann. Alternativ könnte die Folie auch anders befestigt sein, z.B. elektrostatisch oder festgebunden oder dergleichen mehr.

Dabei kann die Folie einen Anteil im infraroten Spektrum retroreflektierender Partikel und einen Anteil IR-lichtabsorbierender Partikel enthalten. Die retroreflektierenden Partikel stellen eine definierte Sichtbarkeit sicher und die absorbierenden die Undurchsichtbarkeit.

Vorteilhafterweise ist die Folie mehrschichtig aufgebaut mit einer ersten visuell transparenten Folienschicht mit IR-retroreflektierenden Partikeln (z.B. Mikrokugeln) und einer zweiten, ebenfalls visuell transparenten aber IR-absorbierenden Folienschicht (z.B. ITO-Partikel).

Alternativ zu einer Folie kann in einfacher Weise die Schicht auch aus aufgesprühten IR-retroreflektierenden Partikeln bestehen. Das vereinfacht die Aufbringung auf die Abtrennung.

In einer weiteren Alternative werden retroreflektierende Partikel zwischen zwei Folienschichten platziert. Dadurch werden die Partikel zu einem Großteil von Luft umhüllt, wodurch für die retroreflektive Eigenschaft von Mikrokugeln besonders günstige Brechungsindexsprünge geschaffen werden.

Die Schicht muss im IR-Spektrum ausreichende Remission bzw. Retroreflektion in Richtung des Sensors aufweisen. Ausreichend in diesem Zusammenhang bedeutet, dass die Nutzsignalstärke im Vergleich zur Störsignalstärke groß genug ist, um eine Signalauswertung vorzunehmen. Die Schicht kann auf transparenten Scheiben der Schutzwände aufgeklebt werden bzw. vor Metallgitter gehängt werden und ist visuell transparent.

Die Partikel in der Schicht sind im visuellen Lichtspektrum transparent und im IR-Spektrum remittierend. Mithilfe der Partikelkonzentration kann der Anteil des remittierten IR-Lichtes und gleichzeitig des transmittierten sichtbaren Lichts gesteuert werden. Dabei gilt, je höher die Partikelkonzentration, desto höher der Anteil des remittierten IR-Lichts und desto geringer der Anteil des transmittierten sichtbaren Lichts. Eine gute Partikelkonzentration ergibt einen ausreichenden Anteil des zum Sensor zurückgeworfenes IR-Lichtes und eine ausreichende Transparenz (des sichtbaren Lichts).

Falls keine störenden IR-Signale hinter den Wänden auftreten können, kann auf eine geringe IR-Transmission der angepassten Wände verzichtet werden. In diesem Fall soll der Sensor die Schutzwand detektieren, um z.B. ein Ruhestromsignal zu erhalten. Hier genügt es, ausschließlich retroreflektierende Partikel aufzutragen. Diese können wie beschrieben entweder auf die Folie oder in die Folie gebracht werden, oder in Form eines Sprays (z.B. Albedo 100, Firma InformCare Ltd.) direkt ohne Folie auf die Wandelemente aufgetragen werden.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer erfindungsgemäßen Vorrichtung;
- Fig. 2 bis 4: Seitenansichten auf Kamera, überwachter Schutzraum, Abtrennung und Objekt.

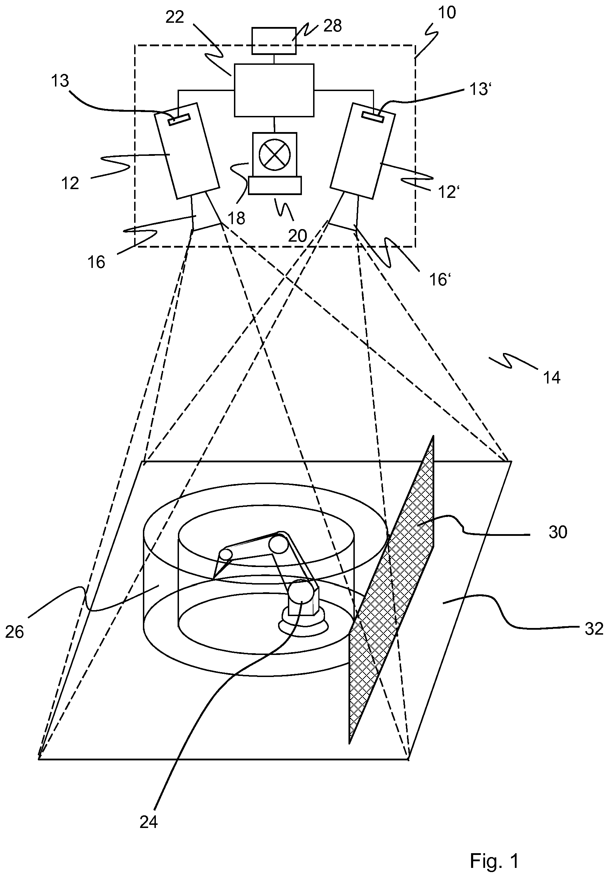

Fig. 1 zeigt in einer schematischen dreidimensionalen Darstellung den Aufbau einer Ausführungsform der erfindungsgemäßen Vorrichtung 11 auf Basis von einer dreidimensionalen Stereoskopie-Kamera 10. Zwei Kameramodule 12, 12' sind in einem bekannten festen Abstand zueinander montiert. Beide Kameras 12, 12' nehmen jeweils das Bild eines Überwachungsbereichs 14 auf. Die Kameras 12, 12' weisen ein nur angedeutetes Objektiv 16, 16' mit einer abbildenden Optik auf. Der Sichtwinkel dieser Optik ist in Fig. 1 durch gestrichelte Linien dargestellt, die jeweils eine Sichtpyramide bilden, und beträgt beispielsweise 45°. In jeder Kamera 12, 12' ist ein Bildsensor 13, 13' vorgesehen. Dieser Bildsensor 13, 13' ist ein matrixförmiger Aufnahmechip, der ein rechteckiges Pixelbild aufnimmt, und kann beispielsweise ein CCD- oder ein CMOS-Sensor sein.

In der Mitte zwischen den beiden Kameras 12, 12' ist eine Beleuchtungsquelle 18 angeordnet. Als Lichtquelle für die Beleuchtungsquelle 18 dient ein Laser mit einer Leistung zwischen 1 und 8 W. Der Laser der Beleuchtungsquelle 18 erzeugt Pulse einer Länge von 1-10 ms. Die Laserleistung kann auch höher sein, sofern die Schutzklasse dies zulässt und die höheren Kosten in Kauf genommen werden. Alternativ ist auch der Einsatz einer oder mehrerer LEDs vorstellbar.

Der Beleuchtungsquelle 18 ist in der optischen Achse ein diffraktives optisches Element 20 nachgeordnet, um in dem Überwachungsbereich 14 ein Beleuchtungsmuster zu erzeugen. Die Beleuchtungsquelle 18 erzeugt Licht einer vorgegebenen und bekannten Wellenlänge, die im infraroten Bereich liegt. Selektiv für diese Wellenlänge lenkt das diffraktive optische Element 20 das von der Beleuchtungsquelle 18 einfallende Licht nur in bestimmte Bereiche des Überwachungsbereichs 14 ab. Das entstehende Beleuchtungsmuster kann ein regelmäßiges, also matrixförmig angeordnetes, Punkt- beziehungsweise Kreismuster sein.

Mit einem anderen diffraktiven optischen Element 20 können auch andere Beleuchtungsmuster erzeugt werden. Auch sind andere Mustererzeugungsmethoden denkbar, z.B. mittels eines stochastischen Mikrolinsenarrays. Dabei ist jedes beliebige Muster erzeugbar, das für die Auswertung hilfreich und kontraststark ist, z.B. ein Linienmuster, ein Schachbrettmuster oder ein Gittermuster. Prinzipiell kann statt eines diffraktiven optischen Elements 20 auch eine Maske verwendet werden. Dies ist aber weniger vorteilhaft, da ein Teil der eingestreuten Lichtenergie in der Maske verloren geht. Alternativ zu einem regelmäßigen Muster kann ein selbstunähnliches Muster vorgesehen sein, dass also durch geometrische Operationen die Verschiebung, Spiegelung oder Drehung in keinem Bereich auf sich selbst zurückgeführt werden kann. Dann kann aus dem Musterbereich auf die Lage im Raum zurückgeschlossen werden, wohingegen ein regelmäßiges Muster dies wegen Mehrdeutigkeiten nicht zulässt.

Mit den beiden Kameras 12, 12' und der Beleuchtungsquelle 18 ist eine Steuer- und Auswertungseinheit 22 verbunden. Die Einheit 22 schaltet die Lichtpulse der Beleuchtungsquelle 18 und empfängt Bildsignale von den beiden Kameras 12, 12'. Darüber hinaus berechnet die Steuer- und Auswertungseinheit 22 mit Hilfe einer stereoskopischen Disparitätsschätzung dreidimensionale Bilddaten des Raumbereichs 14.

Im von der Vorrichtung 11 überwachten Raumbereich 14 befindet sich ein Roboterarm 24, der eine Gefahrenquelle darstellt. Wenn sich der Roboter 24 bewegt, darf sich in seinem Bewegungsradius kein unzulässiges Objekt und insbesondere kein Körperteil von Bedienpersonal befinden. Deshalb ist um den Roboterarm 24 ein virtueller dreidimensionaler Schutzraum 26 gelegt. Die Auswertungseinheit 22 wertet die Bilddaten in diesem Schutzraum 26 aus, um unzulässige Objekteingriffe zu erkennen.

Erkennt die Auswertungseinheit 22 einen unzulässigen Eingriff in den Schutzraum 26, so wird über eine Warn- oder Abschalteinrichtung 28 eine Warnung ausgegeben oder die Gefahrenquelle abgesichert, in dem dargestellten Beispiel also der Roboterarm 24 gestoppt. Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird.

Für Anwendungen in der Sicherheitstechnik ist der Sicherheitssensor 10 fehlersicher ausgelegt. Dies bedeutet unter anderem, dass der Sicherheitssensor 10 sich selber in Zyklen unterhalb der geforderten Ansprechzeit testen kann und dass der Ausgang zur sowie die Warn- und Abschalteinrichtung 28 selbst sicher, beispielsweise zweikanalig ausgelegt ist. Ebenso ist auch die Steuer- und Auswertungseinheit 22 selbst sicher, wertet also zweikanalig aus und/oder verwendet Algorithmen, die sich selbst prüfen können.

Anstelle des dargestellten stereoskopischen Verfahrens umfasst die Erfindung auch weitere dreidimensionale Kamerasysteme, etwa eine Laufzeitkamera, die Lichtpulse oder moduliertes Licht aussendet und aus der Lichtlaufzeit auf Entfernungen schließt, oder aktiv triangulierende Kameras, welche Verzerrungen in der Struktur des Beleuchtungsmusters oder die Lage von Teilen des Beleuchtungsmusters im aufgenommenen Bild zur Berechnung von Entfernungsdaten ausnutzen. Prinzipiell wäre auch die Verwendung von Lichtfeldkameras möglich.

Zusätzlich zu dieser Absicherung mit dem virtuellen Schutzraum 26 weist die Vorrichtung eine mechanische Abtrennung 30 auf, die einen frei zugänglichen äußeren Bereich 32 von dem Schutzraum 26 mechanisch trennt. Die Abtrennung 30 ist visuell transparent, also im sichtbaren Licht durchlässig, damit eine Bedienperson von dem äußeren Bereich 32 aus den Roboter 24 beobachten kann. Die Abtrennung 30 kann dafür z.B. aus Plexiglas oder einem Metallgitter bestehen.

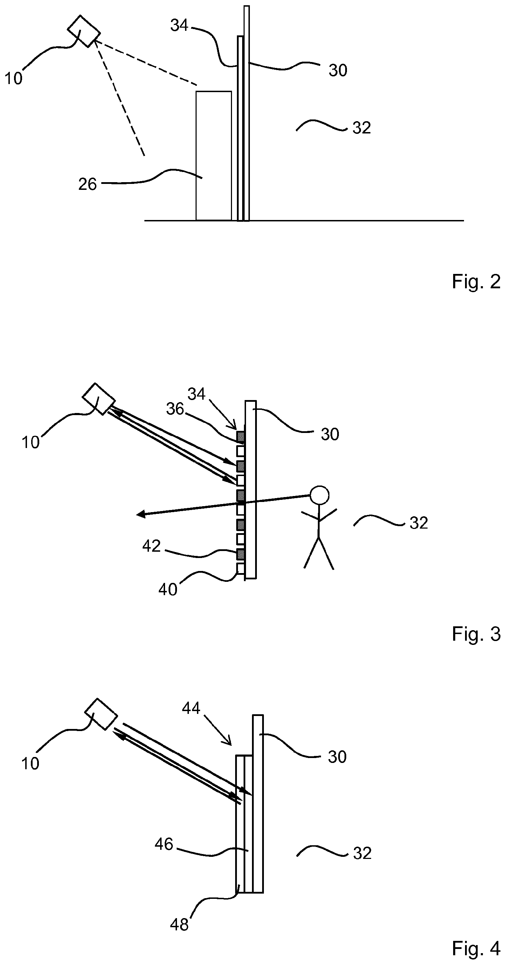

Erfindungsgemäß ist die Abtrennung 30 mit einer Schicht 34 beschichtet (Fig. 2 und 3), so dass die unbeschichtete und für die Kamera 10 zumindest teiltransparente Abtrennung 30 durch die Schicht 34 für die Kamera 10 in definierter Weise sichtbar und undurchsichtig wird. Dann können einerseits Objekte, die sich im frei zugänglichen Bereich 32 befinden, die Kamera 10 nicht mehr stören und andererseits ist sichergestellt, dass die Kamera 10 die Abtrennung 30 immer als vollflächige (im Gegensatz zu Gittern), undurchsichtige Wand "sieht".

Die Schicht 34 besteht in einer Ausführungsform der Erfindung aus einer Folie 36, die im IR-Spektrum eine ausreichende Remission bzw. Retroreflektion in Richtung der Kamera 10 aufweist. Ausreichend in diesem Zusammenhang bedeutet, dass die Nutzsignalstärke im Vergleich zur Störsignalstärke groß genug ist, um eine Signalauswertung vorzunehmen. Die Folie 36 kann auf die Abtrennung 30 aufgeklebt werden bzw. wenn die Abtrennung 30 als Metallgitter ausgebildet ist, gehängt werden. Die Folie 36 ist visuell, also im sichtbaren Spektralbereich, transparent.

Damit die Folie das IR-Licht reflektiert, enthält sie eine funktionale Partikelmischung, bestehend aus einem Anteil IR-retroreflektierender Partikel 40 (z.B. Mikrokugeln) und einem Anteil IR-absorbierender und gleichzeitig visuell transparenter Partikel 42 (z.B. ITO-Partikel). Die Partikel 40, 42 können entweder auf die Folie 36 aufgebracht oder einer Schmelze zur Folienherstellung beigemengt sein. Die Partikel 40 haben die Eigenschaften, dass sie im visuellen Lichtspektrum transparent sind und im IR-Spektrum remittierend.

Mithilfe der Partikelkonzentration kann der Anteil des remittierten IR-Lichtes und gleichzeitig des transmittierten sichtbaren Lichts gesteuert werden. Dabei gilt, je höher die Partikelkonzentration, desto höher der Anteil des remittierten IR-Lichts und desto geringer der Anteil des transmittierten sichtbaren Lichts. Eine gute Partikelkonzentration ergibt einen ausreichenden Anteil des zur Lichtquelle zurückgeworfenen IR-Lichtes und eine ausreichende Transparenz (des sichtbaren Lichts). Es ist sinnvoll verschiedene Folien bereitzustellen, um den Belichtungsverhältnissen vor Ort Rechnung tragen zu können.

In einer anderen Ausführungsform der Folie 36 (Fig. 4) kann diese als Multilayerfolie 44 ausgebildet sein und eine Lage 46 mit visuell transparenter und IR-absorbierender Eigenschaft aufweisen, auf der eine weitere Lage 48 aufgebracht ist, die visuell transparent ist und IR-retroreflektierende Partikel enthält.

## Patentansprüche

1. Optoelektronische Vorrichtung (10) zur Absicherung einer Gefahrenquelle (24) in einem Raumbereich (14) mit mindestens einem Sensor (12), der im infraroten Spektrum arbeitet und welcher entfernungsaufgelöste Daten des Raumbereichs (14) erzeugen kann, sowie mit einer Auswertungseinheit (22), die für die Auswertung der Daten zur Detektion von Objekten in einem dreidimensionalen Schutzraum (26) innerhalb des Raumbereichs (14) ausgebildet ist, wobei zusätzlich die Gefahrenquelle (24) zumindest teilweise durch eine mechanische Abtrennung (30) gesichert ist, die für visuell sichtbares Licht zumindest größtenteils durchlässig ist, **dadurch gekennzeichnet, dass** die Abtrennung (30) mit einer Schicht (34, 36, 44) beschichtet ist, so dass die unbeschichtete und für den Sensor (12) zumindest teiltransparente Abtrennung (30) durch die Schicht (34, 36, 44) für den Sensor (12) in definierter Weise sichtbar und im Infraroten undurchsichtig wird.

2. Vorrichtung nach Anspruch 1, **dadurch gekennzeichnet, dass** die Schicht eine reflektierende Folie ist.

3. Vorrichtung nach Anspruch 2, **dadurch gekennzeichnet, dass** die Folie einen Anteil im infraroten Spektrum retroreflektierender Partikel und einen Anteil IR-lichtabsorbierender Partikel enthält.

4. Vorrichtung nach einem der vorhergehenden Ansprüche, **dadurch gekennzeichnet, dass** die Folie mehrschichtig aufgebaut ist mit einer ersten optisch transparenten Folienschicht mit IR-retroreflektierenden Partikeln und einer zweiten, ebenfalls optisch transparenten aber IR-absorbierenden Folienschicht.

5. Vorrichtung nach Anspruch 1, **dadurch gekennzeichnet, dass** die Folie mehrschichtig aufgebaut ist, wobei zwischen zwei Folienschichten im infraroten Spektrum retroreflektierende Partikel gehalten sind.

6. Vorrichtung nach Anspruch 1, **dadurch gekennzeichnet, dass** die Schicht aus aufgesprühten IR-retroreflektierenden Partikeln besteht.

## Claims

1. An optoelectronic apparatus (10) for securing a source of danger (24) in a spatial zone (14), the optoelectronic apparatus (10) having
at least one sensor (12) that works in the infrared spectrum and that can generate range-resolved data of the spatial zone (14), as well as
an evaluation unit (22) that is configured for the evaluation of the data for the detection of objects in a three-dimensional protected space within the spatial zone (14), wherein the source of danger (24) is additionally at least partly secured by a mechanical partition (30) that is at least very largely permeable for visually visible light, **characterized in that** the partition (30) is coated with a layer (34, 36, 44) in such a way that the non-coated partition (30) that is at least partly transparent for the sensor (12) becomes visible for the sensor (12) in a defined manner and becomes opaque in the infrared spectrum by means of the layer (34, 36, 44).

2. The apparatus in accordance with claim 1, charaterized in that the layer is a reflective film.

3. The apparatus in accordance with claim 2, charaterized in that the reflective film includes a proportion of particles that are retroreflective in the infrared spectrum and a proportion of light-absorbing particles.

4. The apparatus in accordance with any preceding claim, charaterized in that the reflective film is of a multilayer structure and has a first optically transparent film layer having IR-retroreflective particles and has a second film layer that is likewise optically transparent, but IR absorbing.

5. The apparatus in accordance with claim 1, charaterized in that the reflective film is of a multilayer structure, with particles that are retroreflective in the infrared spectrum being held between two film layers.

6. The apparatus in accordance with claim 1, charaterized in that the layer comprises sprayed on IR-retroreflective particles.

## Revendications

1. Appareil opto-électronique (10) pour sécuriser une source de danger (24) dans une zone spatiale (14), l'appareil opto-électronique (10) ayant au moins un capteur (12) qui fonctionne dans le spectre infrarouge et qui peut générer des données résolues en distance de la zone spatiale (14), ainsi qu'une unité d'évaluation (22) configurée pour l'évaluation des données pour la détection d'objets dans un espace protégé tridimensionnel dans la zone spatiale (14), dans lequel la source de danger (24) en outre est au moins partiellement sécurisée par une cloison mécanique (30) qui est au moins perméable en majeure partie à la lumière visuellement visible, **caractérisée en ce que** la cloison (30) est revêtue d'une couche (34, 36, 44) de telle manière que la cloison non revêtue (30) et au moins en partie transparent pour le capteur (12) devient visible pour le capteur (12) d'une manière définie et devient opaque dans le spectre infrarouge au travers de la couche (34, 36, 44).

2. Appareil selon la revendication 1, **caractérisé en ce que** la couche est un film plastique réfléchissant.

3. Appareil selon la revendication 2, **caractérisé en ce que** le film plastique réfléchissant comprend une proportion de particules rétroréfléchissantes dans le spectre infrarouge et une proportion de particules absorbant la lumière.

4. Appareil selon l'une des revendications précédentes, **caractérisé en ce que** le film plastique réfléchissant est d'une structure multicouche avec une première couche de film plastique optiquement transparente ayant des particules rétroréfléchissantes IR et avec une seconde couche de film plastique qui est également optiquement transparente, mais absorbant IR.

5. Appareil selon la revendication 1, **caractérisé en ce que** le film plastique réfléchissant est d'une structure multicouche, dans lequel des particules rétroréfléchissantes dans le spectre infrarouge sont maintenues entre deux couches de film plastique.

6. Appareil selon la revendication 1, **caractérisé en ce que** la couche comprend des particules rétroréfléchissantes IR pulvérisées.
